# EUROPEAN PATENT SPECIFICATION

(11) **EP 0 914 767 B1**
(45) Date of publication and mention of the grant of the patent: **28.08.2002**
(21) Application number: 98308446.8
(22) Date of filing: 15.10.1998
(51) Int. Cl.: A01K 97/10

(54) **Support means**
Ständer zum Auflegen von Angelruten
Support pour canne à pêche

(30) Priority: 07.11.1997 GB 9723540
(43) Date of publication of application: 12.05.1999
(73) Proprietor: Fox Design International Limited, Chelmsford, Essex CM3 8HQ (GB)
(72) Inventor: Fox, Clifford Royston, Chelmsford, Essex CM3 8HQ (GB)
(74) Representative: Crouch, David John

(56) References cited:
- DE-U- 9 415 107
- DE-U- 29 705 815
- GB-A- 2 232 863
- US-A- 3 745 879
- US-A- 4 607 561
- US-A- 5 400 996

## Description

The present invention relates to support means, especially but not exclusively for supporting one or more fishing rods, comprising a main elongate part, at least one end of which is provided with pivot means from which extend two arms pivoted at the pivot means so that they can be pivoted between a position in which they are substantially parallel to the main elongate part and a position in which they are splayed outwardly from one another away from the main elongate part, in which those ends of the arms which are at the pivot means are coupled together in such a manner that movement of one of the arms is dependent on movement of the other, and movement of one of the arms towards the other arm and towards the axis of the main elongate part causes movement of the other arm towards that axis.

Such support means for fishing rods are useful where it is difficult or impossible to insert bank sticks into the ground. For example, the ground may comprise gravel pits, or concrete, or wooden platforms.

One disadvantage of such support means as has been made hitherto is that the arms are capable of being accidentally shifted from a desired position relative to the axis of the main elongate part.

The present invention seeks to inhibit such accidental misalignment.

US-A-5400996 discloses a portable fishing pole support holder including support arms for holding the fishing pole in a variety of elevated, operable positions; legs which support the holder in a standing position; collapsing device for quick, easy, and efficient storage or transport thereof, and locking device for secure operation thereof.

Accordingly, the present invention is directed to support means having a construction as set out in the opening paragraph of this present specification, in which each arm is provided at the end further from the pivot means with retaining means to enable a rod or tube to be held by the support means in an upright position at the end of the arm, with the latter, as well as the main elongate part, being in a generally horizontally orientation.

Such support means are easy to erect, or to stow away, making it so much easier for, for example, an angler to move from one location to another.

Preferably, the two arms are so coupled in this way that they are constrained always to be on opposite sides of the said axis and each is constrained to be at substantially the same angle relative to the said axis as the other arm, to maintain a symmetry in the position of the arms relative to the main elongate part.

One simple and effective means of maintaining the symmetry is to have the ends of the arms which are at the pivot means provided with inter-engaging arcuate toothed portions.

Preferably, the main elongate part is provided with two pivot means, one at one end of the main elongate part and the other at the other end, each pivot means being provided with a pair of such arms.

Preferably, the main elongate part is telescopically adjustable in length. Advantageously, each arm is also telescopically adjustable in length.

A cross-bar may extend between and be secured to the upper ends of two upright rods or tubes held respectively at the end of two arms extending from the same pivot means, whereby the main elongate part, the arms, the rods or tubes and the cross-bar are all fixed in position relative to one another.

A similar arrangement of rods or tubes and cross-bar may be provided at the other end of the support means, and rod rests may be provided on the cross-bars to enable one or more fishing rods to be supported thereon.

One or more of the rod rests may comprise one or more bite detectors.

At least one of the rods or tubes may be telescopically adjustable in length.

Preferably, the or each retaining means is annular in cross-section.

The retaining means may be of such a construction that a rod or tube held by it can be thus held at substantially any position along its length. It is thereby possible to have support means in which the rods extend further below the retaining means at one end of the support means than they do at the other, so as to allow for sloping ground. Equally, the rod which extends through one of a pair of arms may extend further below the retaining means than the other, to allow for uneven ground.

Thus, regardless of the slope or evenness of the ground, a cross-bar or cross-bars can readily be made horizontal.

An example of support means made in accordance with the present invention is illustrated in the accompanying drawings, in which:
- Figure 1: is a perspective view from above of the support means in an extended position ready for use;
- Figure 2: shows a plan view of the support means shown in Figure 1;
- Figure 3: shows an end view of the support means shown in Figure 1;
- Figure 4: shows one end of the support means shown in Figure 1 on a larger scale;
- Figure 5: shows parts of the support means shown in Figure 1 on a larger scale still, with one of the parts thereof made to appear transparent to reveal further parts therewithin;
- Figure 6: shows a side view of the support means shown in Figure 1;
- Figure 7: shows a side view of the support means shown in Figure 1 in a folded condition ready for being stowed away;
- Figure 8: shows a plan view of parts shown in Figure 7 drawn in greater detail and on a larger scale;
- Figures 8a, 8b, 8c and 8d: show respectively a perspective view, a side view, a top view and an end view of a fixing part shown in Figure 8;
- Figure 9: shows an assembly of the support means shown in Figure 1, together with upright poles and cross-bars;
- Figure 10: shows an end view of the assembly shown in Figure 9;
- Figure 11: shows a side view of the assembly shown in Figure 9;
- Figure 12: shows an exploded view of the assembly shown in Figure 9 with rod rests;
- Figure 13: shows the assembly of Figure 9 provided with rod rests and shown with fishing rods supported thereby;
- Figure 14: shows the assembly of Figure 9 modified so that a pair of upright poles are substantially longer and project further below and further above the support means shown in Figure 1 than the poles provided at the other end of the support means; and
- Figure 15: shows an end view of an assembly like that shown in Figure 9 but with a longer cross-bar.

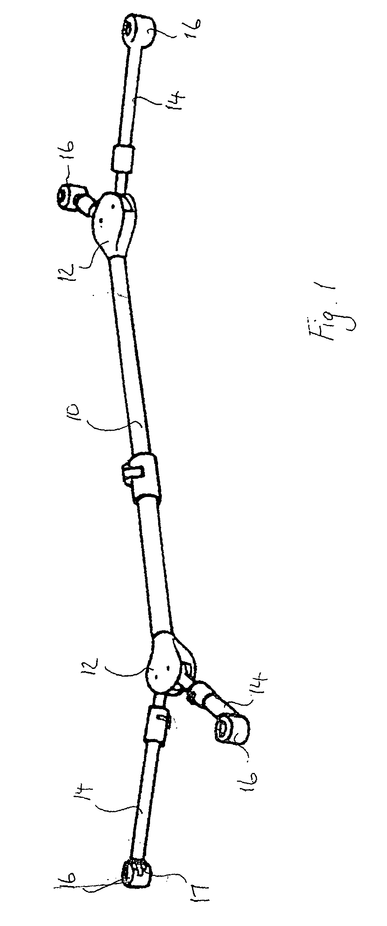

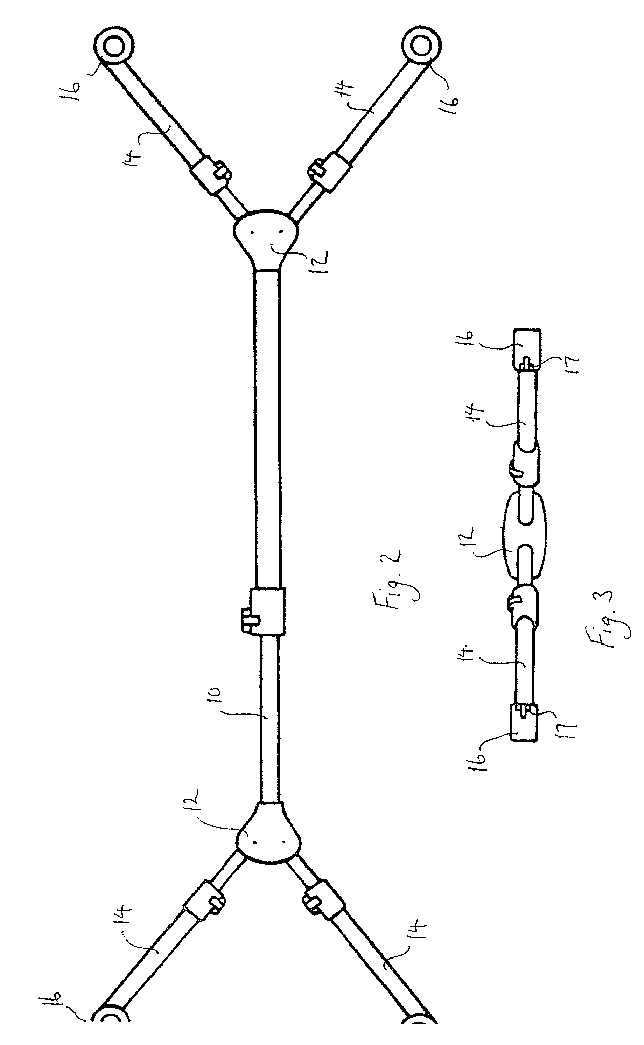

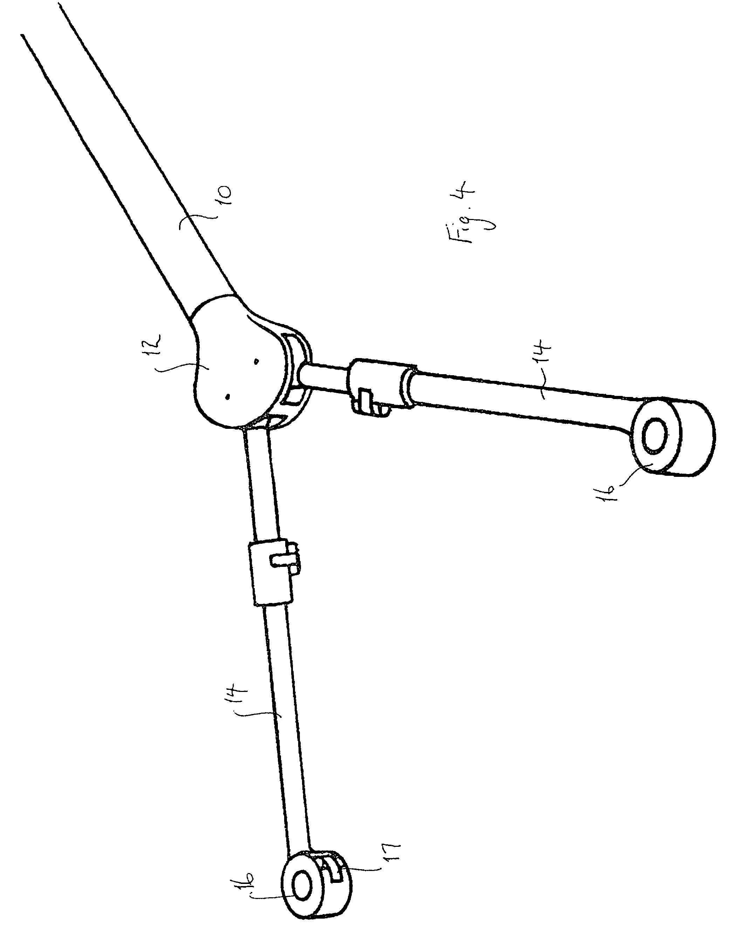

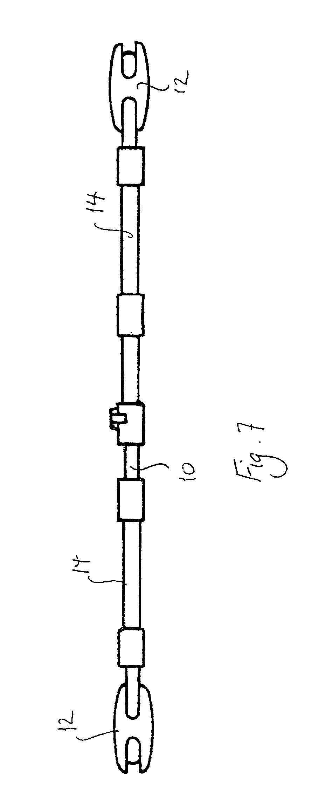

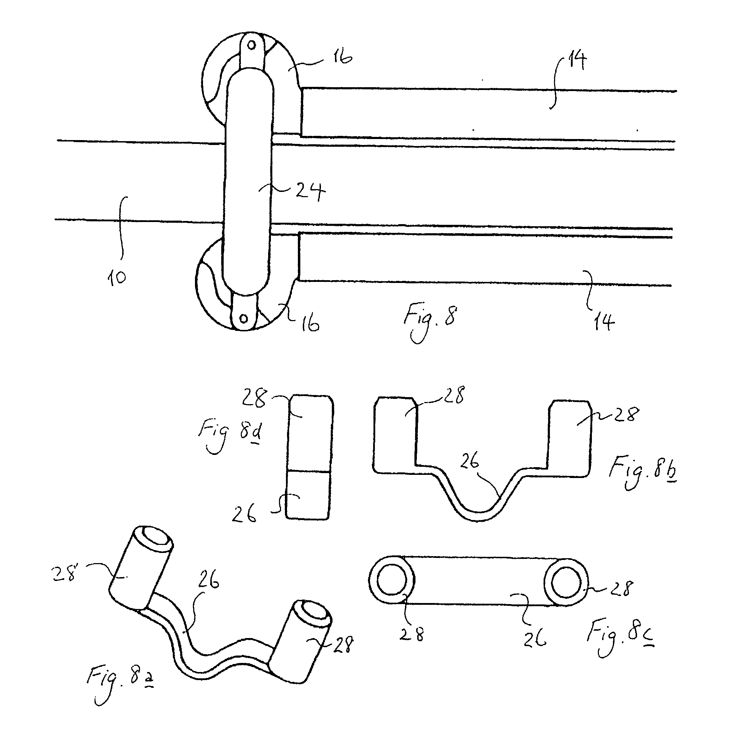

The support means shown in Figures 1 to 8 comprises an aluminium telescopically adjustable tubular elongate main part 10 provided with two hollow moulded synthetic plastics or pressure die cast aluminium pivot blocks 12 at its two ends respectively. Each block 12 is provided with a pair of arms 14 extending in a "V" outwardly therefrom and having respective ends pivotally retained by the pivot block 12. Both arms are also made of aluminium and are also telescopically adjustable in length, and each arm 14 has a tubular pole-retaining means 16 at its end further from the pivot block 12. The tubular retaining means 16 are mouldings and are orientated so that their axes are substantially parallel to one another and generally orthogonal to the arms 14 and the main elongate part 10. Each retaining means 16 has clamping means 17 to enable it to clamp in position a pole or bank-stick threaded through it. The clamping means 17 may be in the form of a thumbscrew device or a cam-action locking device, the latter being preferred for ease of adjustment and to reduce the likelihood of marking or damaging the pole or bank-stick.

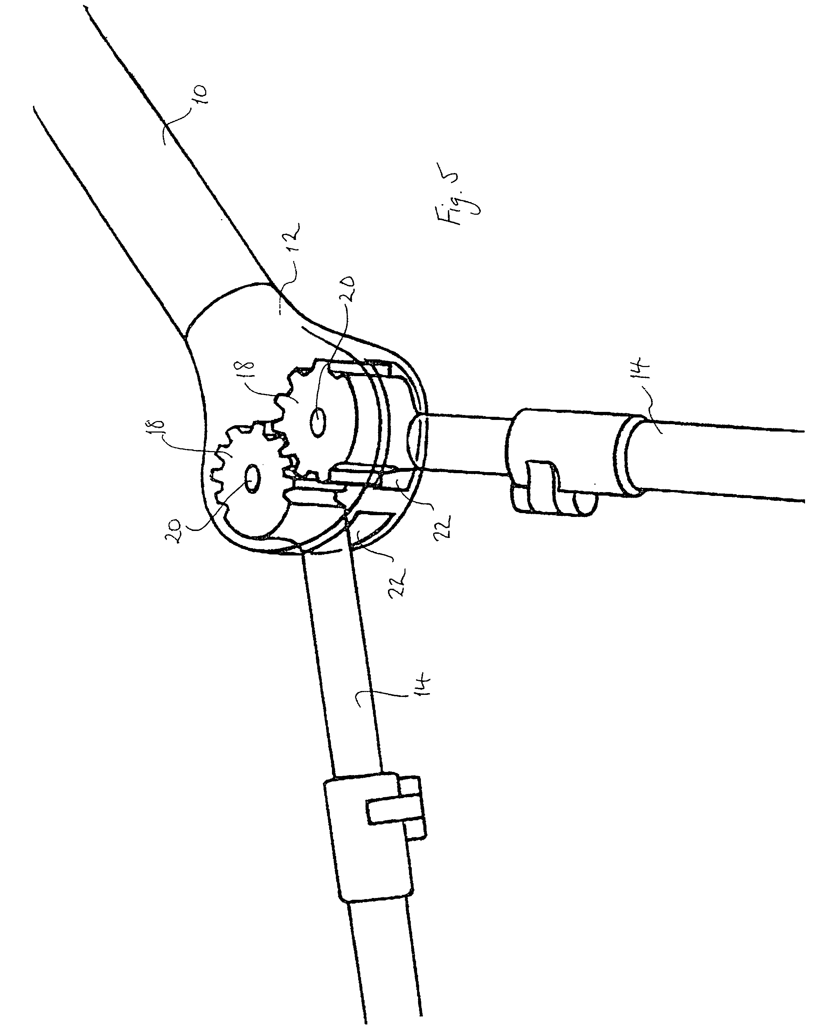

As shown more clearly in Figure 5, the inner ends of the arms 14 have inter-engaging arcuate toothed or gear wheel portions 18, the arcs being centred on the respective pivots 20 of the hollow pivot block 12. Slots 22 provided in the hollow block 12 facilitate a pivoting movement of each arm 14 about the pivot 20.

It will thus be seen that the toothed portions 18 ensure that the arms 14 are always symmetrically arranged relative to the elongate part 10, and that the angle one of the arms makes to the axis of the part 10 is always substantially the same as the angle the other arm of the pair makes with that axis. If one of the arms 14 is moved towards the other arm 14 and towards the axis of the part 10, the other arm moves correspondingly towards that axis. As a result, whilst the spacing between the ends of the arms 14 can be infinitely varied, once their spacing is fixed, the arms cannot be knocked out of their position of symmetry with respect to the main part 10.

The arms can be pivoted about their pivots 20 until they are brought alongside the main part 10, as shown in the stow away position of Figure 7. In this position, the ends of each pair of arms further from the pivot block 12 are made secure in position by means of a clip 24. The latter comprises a bridge portion 26 extending between two generally cylindrical portions 28 which can be inserted in the respective tubular retaining means 16.

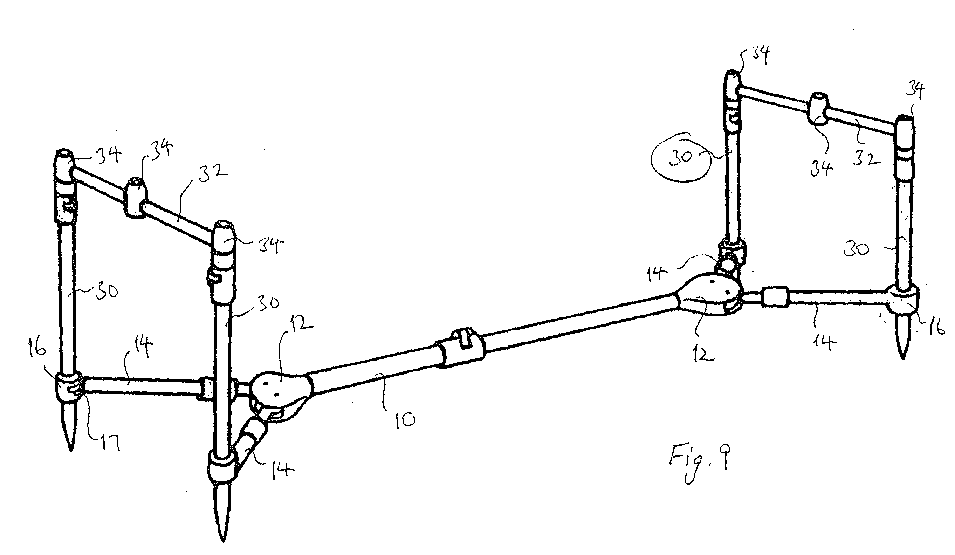

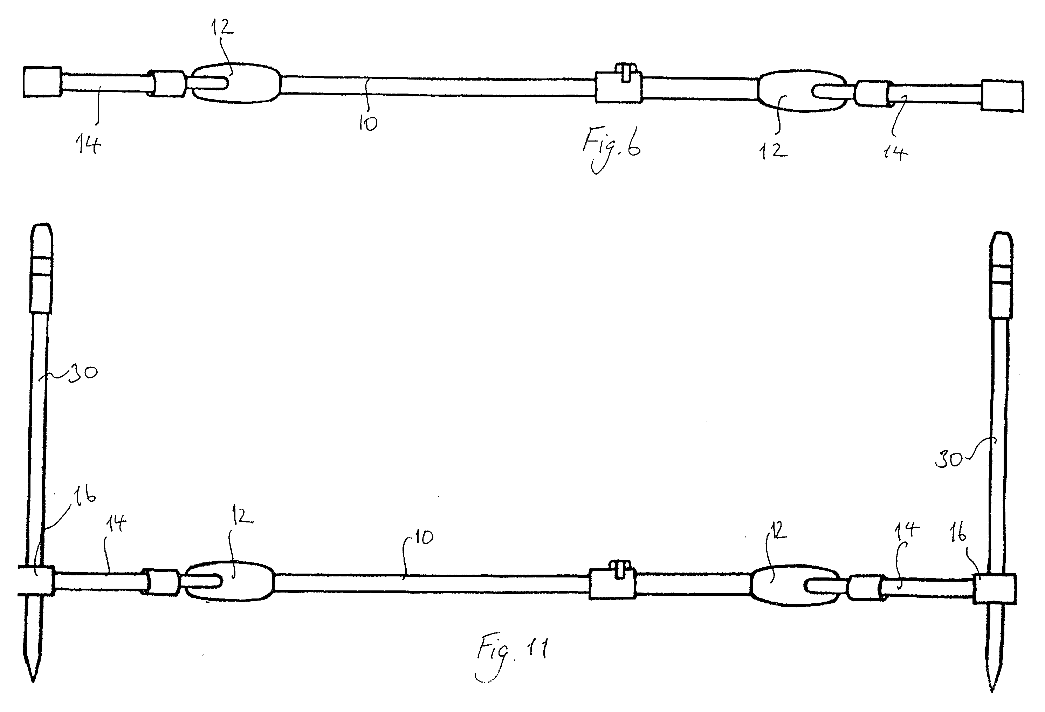

In the assembly shown in Figures 9 to 11, each tubular retaining means 16 is provided with an upright pole or bank-stick 30 which extends through and is held fast by the retaining means 16. Respective cross-bars or buzz bars extend across and are secured to the upper ends of the pair of upright poles 30 respectively. Each cross-bar 32 is provided with three mounts 34, one at each end and one in the middle.

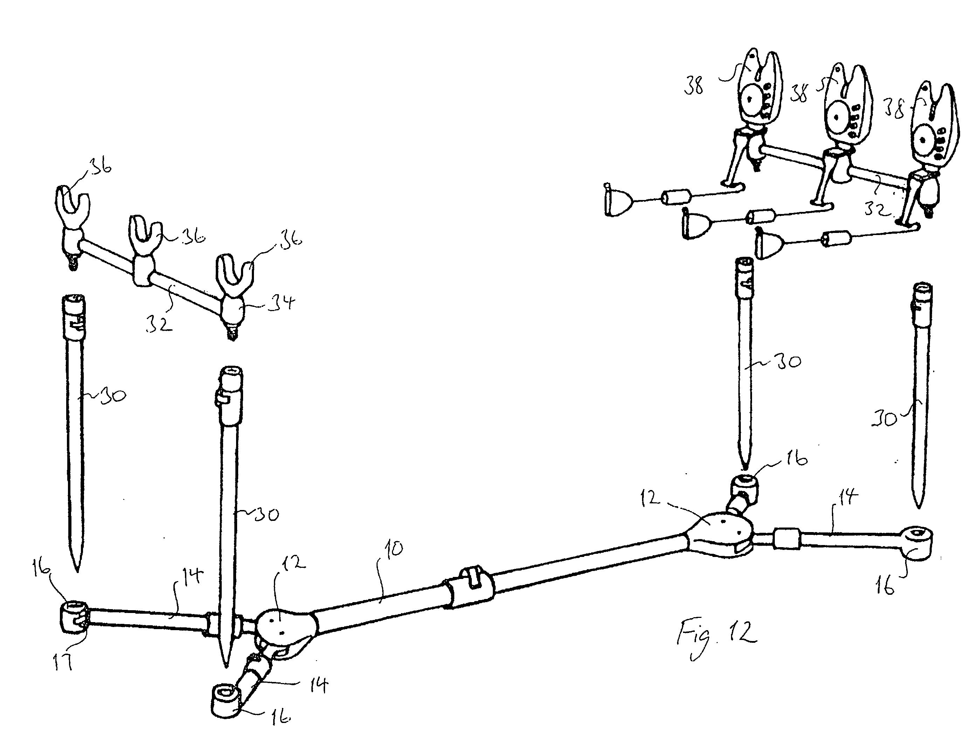

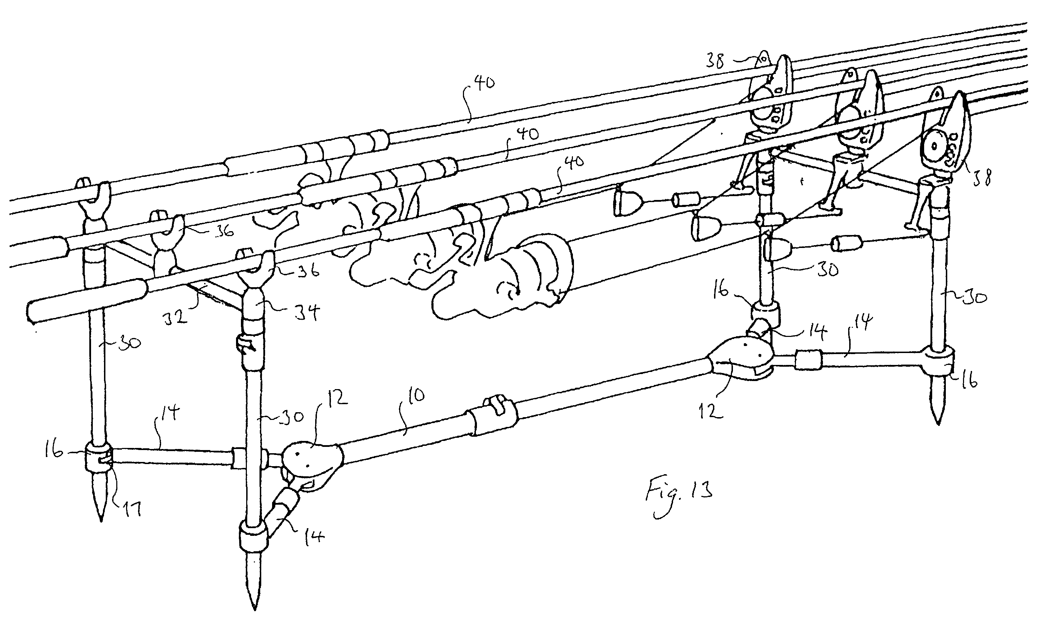

With reference to Figures 12 and 13, the mounts 34 at one end are provided with rod rests 36 and the mounts 34 at the other end of the assembly are provided with bite detectors 38. Three rods 40 can thereby be supported by the rod rests 36 and by detectors 38.

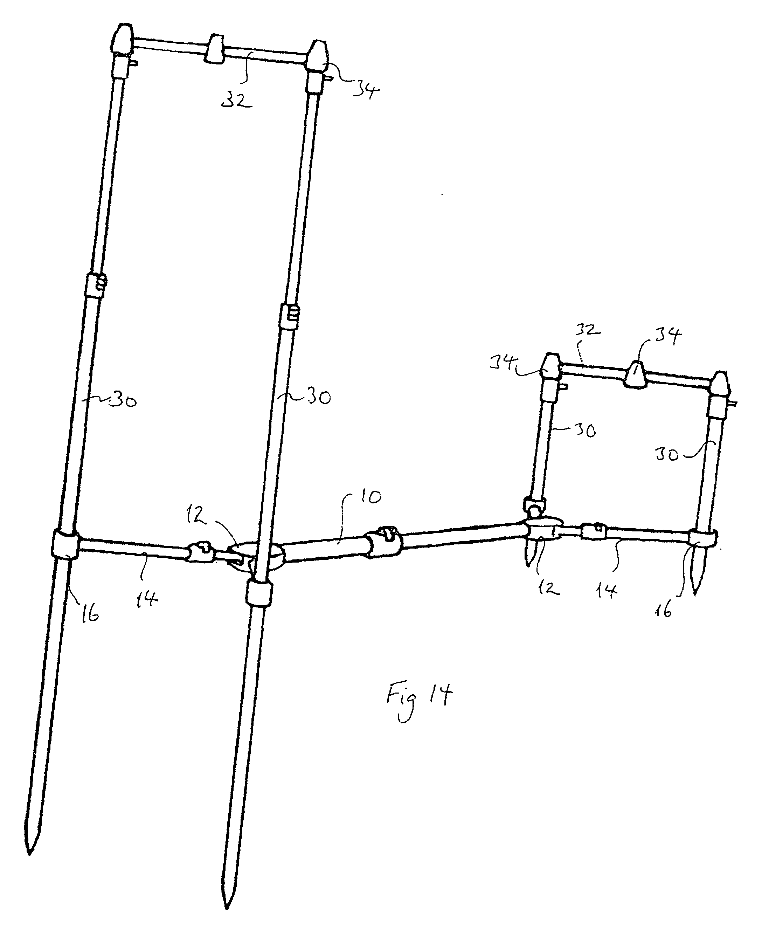

The assembly shown in Figure 14 is modified so that the poles 30 at one end thereof are substantially longer and project downwardly from the support means than do the poles at the other end thereof, and they also extend upwardly to a greater degree.

In this way, compensation can be made for a sloping ground and can even incline the fishing rods in the opposite direction to the incline of the ground. It will be appreciated in this respect that the two poles 30 of a pair can be of different lengths to take account of uneven ground.

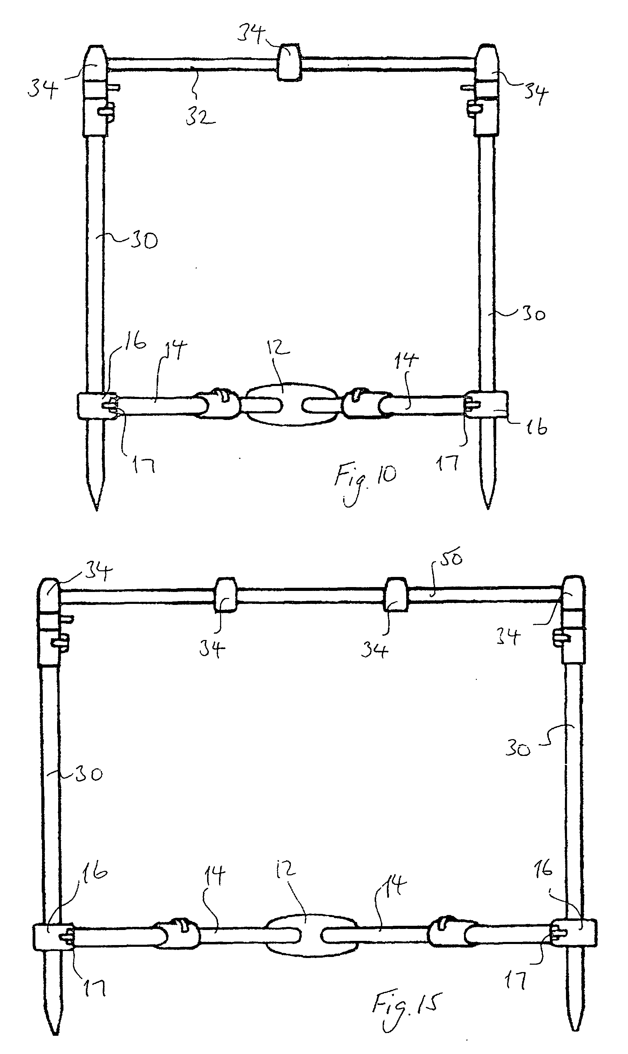

Figure 15 shows a wider cross-bar 50 provided with four mounts 34, the arms 14 having been made longer by way of their telescopic adjustment, and the two arms 14 in each pair being splayed away from one another sufficiently to accommodate the greater length of the cross-bar 50.

Numerous variations and modifications to the illustrated support means and assemblies will be apparent to the reader without taking the resulting modification outside the scope of the present invention according to the appended claims. For example, the support means may have only one end provided with pivot means and a pair of arms extend therefrom, the other end being provided with simple fixed retaining means like the ones shown in the Figures at the ends of the arms, this lone retaining means being used to support a single upright pole with a cross-bar attached to the top thereof to form a T-shape.

## Claims

1. Support means, especially but not exclusively for supporting one or more fishing rods, comprising a main elongate part (10), at least one end of which is provided with pivot means (12) from which extend two arms (14) pivoted at the pivot means (12) so that they can be pivoted between a position in which they are substantially parallel to the main elongate part (10) and a position in which they are splayed outwardly from one another away from the main elongate part (10), in which those ends of the arms (14) which are at the pivot means (12) are coupled together in such a manner that movement of one of the arms (14) is dependent on movement of the other, and movement of one of the arms (14) towards the other arm (14) and towards the axis of the main elongate part (10) causes movement of the other arm (14) towards that axis, **characterised in that** each arm (14) is provided at the end further from the pivot means (12) with retaining means (16) to enable a rod or tube (30) to be held by the support means in an upright position at the end of the arm (14), with the latter, as well as the main elongate part (10), being in a generally horizontal orientation.

2. Support means according to claim 1, **characterised in that** the two arms (14) are so coupled in this way that they are constrained always to be on opposite sides of the said axis and each is constrained to be at substantially the same angle relative to the said axis as the other arm (14), to maintain a symmetry in the position of the arms (14) relative to the main elongate part (10).

3. Support means according to claim 2, **characterised in that** the ends of the arms (14) which are at the pivot means (12) are provided with inter-engaging arcuate toothed portions (18).

4. Support means according to any preceding claim, **characterised in that** the main elongate part (10) is provided with two pivot means (12), one at one end of the main elongate part (10) and the other at the other end, each pivot means (12) being provided with a pair of such arms (14).

5. Support means according to any preceding claim, **characterised in that** the main elongate part (10) is telescopically adjustable in length.

6. Support means according to any preceding claim, **characterised in that** each arm (14) is telescopically adjustable in length.

7. Support means according to any preceding claim, **characterised in that** the or each retaining means (18) is annular in cross-section.

8. Support means according to any preceding claim, **characterised in that** the retaining means (18) are of such a construction that a rod or tube (30) held by it can be thus held at substantially any position along its length.

9. Support means according to any preceding claim, **characterised in that** a cross-bar (32) extends between and is secured to the upper ends of two upright rods or tubes (30) held respectively at the ends of two arms (14) extending from the same pivot means (12), whereby the main elongate part (10), the arms (14), the rods or tubes (30) and the cross-bar (32) are all fixed in position relative to one another.

10. Support means according to claim 9, **characterised in that** the same or substantially the same arrangement of rods or tubes (30) and cross-bar (32) is provided at the other end of the support means.

11. Support means according to claim 9 or claim 10, **characterised in that** one or more rod rests (34) are provided on the or each cross-bar (32) to enable one or more fishing rods to be supported thereon.

12. Support means according to claim 11, **characterised in that** one or more of the rod rests (34) comprise one or more bite detectors (34).

13. Support means according to any one of claims 9 to 12, **characterised in that** at least one of the rods or tubes (30) is telescopically adjustable in length.

## Patentansprüche

1. Ständer, insbesondere, jedoch nicht ausschließlich, zum Stützen einer oder mehrerer Angelruten, aufweisend ein längliches Hauptteil (10), wobei mindestens ein Ende desselben mit einem Gelenkverbindungsmittel (12) versehen ist, von dem aus sich zwei Arme (14) erstrecken, die schwenkbar am Gelenkverbindungsmittel (12) angebracht sind, so dass sie zwischen einer Position, in der sie im Wesentlichen parallel zum länglichen Hauptteil (10) sind, und einer Position, in der sie vom länglichen Hauptteil (10) weg in Bezug aufeinander nach außen gespreizt sind, schwenkbar sind, wobei jene Enden der Arme (14), die bei dem Gelenkverbindungsmittel (12) sind, so aneinander gekoppelt sind, dass eine Bewegung eines der Arme (14) von der Bewegung des anderen abhängt und eine Bewegung eines der Arme (14) gegen den anderen Arm (14) und gegen die Achse des länglichen Hauptteils (10) eine Bewegung des anderen Armes (14) gegen jene Achse bewirkt, **dadurch gekennzeichnet, dass** jeder Arm (14) an dem von dem Gelenkverbindungsmittel (12) beabstandeten Ende mit Haltemitteln (16) ausgestattet ist, um es zu ermöglichen, dass ein Stab oder ein Rohr (30) vom Ständer in einer aufrechten Position am Ende des Armes (14) gehalten wird, wobei der letztere ebenso wie das längliche Hauptteil (10) im Wesentlichen horizontal ausgerichtet sind.

2. Ständer nach Anspruch 1, **dadurch gekennzeichnet, dass** die beiden Arme (14) so gekoppelt sind, dass sie einem ständigen Zwang nach entgegengesetzten Seiten der Achse unterliegen und jeder einem Zwang unterliegt, sich im Wesentlichen im selben Winkel relativ zur Achse wie der andere Arm (14) einzustellen, um eine Symmetrie in der Position der Arme (14) relativ zum länglichen Hauptteil (10) aufrechtzuerhalten.

3. Ständer nach Anspruch 2, **dadurch gekennzeichnet, dass** die Enden der Arme (14), die sich an dem Gelenkverbindungsmittel (12) befinden, mit ineinander greifenden bogenförmigen Zahnabschnitten (18) versehen sind.

4. Ständer nach einem der vorstehenden Ansprüche, **dadurch gekennzeichnet, dass** das längliche Hauptteil (10) mit zwei Gelenkverbindungsmitteln (12) ausgestattet ist, nämlich einem an einem Ende des länglichen Hauptteils (10) und das andere am anderen Ende, wobei jedes Gelenkverbindungsmittel (12) mit einem Paar solcher Arme (14) ausgestattet ist.

5. Ständer nach einem der vorstehenden Ansprüche, **dadurch gekennzeichnet, dass** das längliche Hauptteil (10) teleskopartig bezüglich der Länge einstellbar ist.

6. Ständer nach einem der vorstehenden Ansprüche, **dadurch gekennzeichnet, dass** jeder Arm (14) bezüglich der Länge teleskopartig einstellbar ist.

7. Ständer nach einem der vorstehenden Ansprüche, **dadurch gekennzeichnet, dass** das oder jedes Haltemittel (18) einen ringförmigen Querschnitt aufweist.

8. Ständer nach einem der vorstehenden Ansprüche, **dadurch gekennzeichnet, dass** die Haltemittel (18) so konstruiert sind, dass ein Stab oder ein Rohr (30), der/das von ihnen gehalten wird, auf diese Weise bei im Wesentlichen jeder Position entlang seiner Länge gehalten werden kann.

9. Ständer nach einem der vorstehenden Ansprüche, **dadurch gekennzeichnet, dass** sich zwischen den oberen Enden zweier aufrechter Stäbe oder Rohre (30), die jeweils an den Enden zweier Arme (14) gehalten werden, welche sich vom selben Gelenkverbindungsmittel (12) aus erstrecken, eine Querstange (32) erstreckt und an denselben befestigt ist, wodurch das längliche Hauptteil (10), die Arme (14), die Stäbe oder Rohre (30) und die Querstange (32) bezüglich ihrer Position zu einander befestigt sind.

10. Ständer nach Anspruch 9, **dadurch gekennzeichnet, dass** dieselbe oder im Wesentlichen dieselbe Anordnung von Stäben oder Rohren (30) und der Querstange (32) am anderen Ende des Ständers vorhanden ist.

11. Ständer nach Anspruch 9 oder 10, **dadurch gekennzeichnet, dass** eine oder mehrere Stabauflagen (34) auf der oder jeder Querstange (32) vorhanden ist, um es zu ermöglichen, dass eine oder mehrere Angelruten darauf gestützt werden.

12. Ständer nach Anspruch 11, **dadurch gekennzeichnet, dass** eine oder mehrere der Stabauflagen (34) einen oder mehrere Bissanzeiger (38) aufweisen.

13. Ständer nach mindestens einem der Ansprüche 9 bis 12, **dadurch gekennzeichnet, dass** mindestens einer der Stäbe oder Rohre (30) bezüglich der Länge teleskopartig einstellbar ist.

## Revendications

1. Moyens support, spécialement mais non exclusivement pour supporter une ou plusieurs canne à pêche, comprenant une partie allongée principale (10), dont au moins une extrémité est munie de moyens de pivotement (12) d'où s'étendent deux bras (14) montés de façon pivotante sur les moyens de pivotement (12), de manière à pouvoir être pivotés entre une position, à laquelle ils sont sensiblement parallèles à la partie allongée principale (10), et une position à laquelle ils sont écartés vers l'extérieur l'un de l'autre depuis la partie allongée principale (10), dans lesquels les extrémités des bras (14) qui sont au niveau des moyens de pivotement (12) sont couplées ensemble de manière que le déplacement d'un des bras (14) dépende du déplacement de l'autre, et le déplacement d'un des bras (14) vers l'autre bras (14) et vers l'axe de la partie allongée principale (10) provoquant le déplacement de l'autre bras (14) vers cet axe, **caractérisés en ce que** chaque bras (14) est équipé, à l'extrémité distale des moyens de pivotement (12), de moyens de retenue (16) permettant de maintenir une tige ou un tube (30) par les moyens support en position dressée à l'extrémité du bras (14), ce dernier, ainsi que la partie allongée principale (10), étant en orientation globalement horizontale.

2. Moyens support selon la revendication 1, **caractérisés en ce que** les deux bras (14) sont couplés de manière qu'ils sont contraints à être toujours sur des côtes opposés dudit axe, et chacun étant contraint d'être pratiquement au même angle par rapport audit axe que celui auquel se trouve l'autre bras (14), afin de maintenir une symétrie au niveau de la position des bras (14) par rapport à la partie allongée principale (10).

3. Moyens support selon la revendication 2, **caractérisés en ce que** les extrémités des bras (14) qui sont au niveau des moyens de pivotement (12) sont munis de parties dentées (18) arquées, s'engrenant ensemble.

4. Moyens support selon l'une quelconque des revendications précédentes, **caractérisés en ce que** la partie allongée principale (10) est munie de deux moyens de pivotement (12), une à une extrémité de la partie allongée principale (10) et l'autre à l'autre extrémité, chaque moyen de pivotement (12) étant muni d'une paire de tels bras (14).

5. Moyens support selon l'une quelconque des revendications précédentes, **caractérisés en ce que** la partie allongée principale (10) est ajustable en longueur de façon télescopique.

6. Moyens support selon l'une quelconque des revendications précédentes, **caractérisés en ce que** chaque bras (14) est ajustable en longueur de façon télescopique.

7. Moyens support selon l'une quelconque des revendications précédentes, **caractérisés en ce que** le ou chaque moyen de retenue (18) a une section transversale annulaire.

8. Moyens support selon l'une quelconque des revendications précédentes, **caractérisés en ce que** les moyens de retenue (18) sont d'une construction faisant qu'une tige ou un tube (30), maintenus par eux, peut être ainsi maintenu(e) pratiquement en toute position sur sa longueur.

9. Moyens support selon l'une quelconque des revendications précédentes, **caractérisés en ce qu'**une barre transversale (32) s'étend entre et est fixée sur les extrémités supérieures de deux tiges ou tubes (30) dressé(e)s, maintenus respectivement aux extrémités des deux bras (14), s'étendant depuis les mêmes moyens de pivotement (12), de manière que la partie allongée principale (10), les bras (14), les tiges ou tubes (30) et la barre transversale (32) soient tous fixé(e)s en une position relative les uns par rapport aux autres.

10. Moyens support selon la revendication 9, **caractérisés en ce que** le même agencement, ou pratiquement le même agencement des tiges ou tubes (30) et de la barre transversale (32) est fourni à l'autre extrémité des moyens support.

11. Moyens support selon la revendication 9 ou la revendication 10, **caractérisés en ce qu**'un ou plusieurs reposoir(s) à tiges (34) sont prévu(s) sur la ou chaque barre transversale (32) pour permettre à une ou plusieurs canne(s) à pêche d'être supportée(s) sur elle(s)

12. Moyens support selon la revendication 11, **caractérisés en ce que** un ou plusieurs des reposoirs à tige (34) forme(nt) un ou plusieurs détecteur(s) de touche (34).

13. Moyens support selon l'une quelconque des revendications 9 à 12, **caractérisé en ce qu**'au moins l'une des tiges ou l'un des tubes (30) est ajustable en longueur de façon télescopique.
